# EUROPÄISCHE PATENTSCHRIFT

(11) **EP 3 726 300 B1**
(45) Veröffentlichungstag und Bekanntmachung des Hinweises auf die Patenterteilung: **02.06.2021**
(21) Anmeldenummer: 20163437.5
(22) Anmeldetag: 16.03.2020
(51) Int. Cl.: G05B 9/02

(54) **SICHERHEITSVORRICHTUNG MIT EINER VIELZAHL VON SCHALTERELEMENTEN ZUM EINSTELLEN MINDESTENS EINES BETRIEBSPARAMETERS**
SAFETY DEVICE WITH A PLURALITY OF SWITCH ELEMENTS FOR ADJUSTING AT LEAST ONE OPERATING PARAMETER
DISPOSITIF DE SÉCURITÉ DOTÉ D'UNE PLURALITÉ D'ÉLÉMENTS DE COMMUTATION DESTINÉ À RÉGLER AU MOINS UN PARAMÈTRE DE FONCTIONNEMENT

(30) Priorität: 16.04.2019 DE 102019110066
(43) Veröffentlichungstag der Anmeldung: 21.10.2020
(73) Patentinhaber: SICK AG, 79183 Waldkirch (DE)
(72) Erfinder: Weidenmüller, Jonas, 79115 Freiburg (DE); Behre, Frederik, 79365 Rheinhausen (DE)

(56) Entgegenhaltungen:
- EP-A2- 1 291 746
- WO-A1-2016/008945
- DE-A1-102014 100 970

## Beschreibung

Die Erfindung betrifft eine Sicherheitsschaltvorrichtung, insbesondere ein Sicherheitsrelais, mit einer Vielzahl von Schalterelementen sowie ein Verfahren zum Einstellen mindestens eines Betriebsparameters nach dem Oberbegriff von Anspruch 1 beziehungsweise 12.

Eine gattungsgemäße Sicherheitsschaltvorrichtung ist eine Form einer Sicherheitssteuerung, deren Funktion es ist, bei Anliegen eines Gefahrensignals fehlerfrei auf eine vorgegebene Art zu reagieren. Eine typische Anwendung der Sicherheitstechnik ist die Absicherung gefährlicher Maschinen, wie etwa Pressen oder Roboter, die sofort abgeschaltet oder abgesichert werden müssen, wenn sich Bedienpersonal in unerlaubter Weise nähert. Dazu ist ein Sensor vorgesehen, der die Annäherung erkennt, wie etwa ein Lichtgitter oder eine Sicherheitskamera. Erkennt ein solcher Sensor eine Gefährdung, so muss eine mit dem Sensor verbundene Sicherheitssteuerung absolut zuverlässig ein Abschaltsignal generieren.

Eine derart im Personenschutz eingesetzte Sicherheitsschaltvorrichtung muss hohe Anforderungen an ihre Zuverlässigkeit und Fehlersicherheit erfüllen. Das ist in einschlägigen Sicherheitsnormen festgehalten und bedeutet beispielsweise, dass Auswertungen und Anschlüsse redundant oder diversitär-redundant vorhanden sind, um einen mehrkanaligen Aufbau zu realisieren, und/oder Selbsttests in kurzen Zyklen vorgesehen sind, um Fehler aufzudecken.

Sicherheitsrelais sind Beispiele für einfache Sicherheitssteuerungen mit geringem Funktionsumfang oder nicht änderbarer Funktion. Um ein günstiges Gerät anbieten zu können, besitzen solche Sicherheitsrelais keine Schnittstelle, um sie mit einem Rechner zu verbinden und von dort aus zu konfigurieren. Zumindest einige Konfigurationsmöglichkeiten in gewissem Rahmen möchte der Anwender aber noch haben, da sonst zu viele Varianten angeboten und eingesetzt werden müssten. Ein Beispiel ist ein Sicherheitsrelais mit verzögert öffnenden Kontakten, wo wünschenswert ist, wenn sich die Verzögerungszeit einstellen lässt. Die Konfiguration hat Einfluss auf das Verhalten des Geräts im Gefährdungsfall, wenn also das Sicherheitsschaltgerät seine geforderte Sicherheits- oder Schaltfunktion verlässlich leisten soll. Deshalb muss das Risiko einer gefährlichen Veränderung der Konfiguration durch zufällige Fehler den Sicherheitsanforderungen entsprechend gering sein.

In manchen Fällen wirkt die Eingabemöglichkeit direkt auf den Schaltkreis, etwa bei einem Potentiometer als Widerstand in einem RC-Glied. Das ist aber für viele Konfigurationen nicht flexibel genug. Dann ist erforderlich, die beispielsweise mittels Drehschalter oder DIP-Schalter erfolgte Eingabe einzulesen und zu interpretieren. Um hier ausreichende Fehlersicherheit zu gewährleisten, werden üblicherweise die Schalterstellungen von einer zweikanaligen Microcontroller-Architektur redundant eingelesen und verglichen. Damit ist zwar sichergestellt, dass die beabsichtigte Konfiguration korrekt eingelesen wurde, aber das redundante Einlesen belegt Hardwareressourcen in beiden Kanälen, wie etwa GPIO (General Purpose Input/Output), AD-Wandler oder SPI (Serial Peripheral Interface).

Es ist aus der Telekommunikation bekannt, einkanalige Datenübertragungen durch Protokolle und Fehlererkennungsmethoden abzusichern, und derartige Ansätze werden auch genutzt, um eine Steuerung über einen Rechner zu konfigurieren. Das erfordert aber erst recht Hardwareressourcen, die eine einfache Sicherheitsschaltvorrichtung nicht bereitstellt.

Die EP 1 847 891 A1 offenbart ein Verfahren zur sicheren Parametrierung einer Sicherheitsschaltvorrichtung. Dabei ist eine Reihe von DIP-Schaltern vorgesehen, deren Schalterzustand auf eine Anzeige mit einer entsprechenden Anzahl LEDs übertragen wird. Der Anwender übernimmt die mittels der DIP-Schalter vorgegebenen und über die LEDs angezeigte Betriebsparametereinstellung durch eine Bestätigung. Eine ähnliche Konfiguration beschreibt auch die WO 2016/008945 A1. Damit wird jedoch die Kontrolle, ob beim Einlesen der DIP-Schalter ein Fehler aufgetreten ist, dem Anwender überlassen.

Die EP 1 291 746 A2 offenbart eine elektronische Sicherheitsschaltung für eine Druckmaschine. Mehrere Sicherheitsschalter zum Selektiven schalten der sicherheitsrelevanten Einrichtungen der Druckmaschine sind an Klappen oder Türen der Druckmaschine angeordnet.

Eine weitere beispielsweise von Lichtgittern bekannte Maßnahme ist ein Paritätsschalter, der zusätzlich zu mehreren Schaltern zum Einstellen einer Konfiguration vorhanden ist und selbst keinen Einfluss auf die Konfiguration nimmt. Vielmehr muss der Paritätsschalter so gesetzt werden, dass insgesamt eine ungerade Anzahl Schalter auf aktiv gesetzt ist. Das Sicherheitsniveau mit nur einem einzigen Paritätsbit für sämtliche Schalterstellungen ist nicht besonders hoch, und zudem muss das Paritätsbit händisch erzeugt werden.

Es ist daher Aufgabe der Erfindung, ein einfaches und zugleich fehlersicheres Einlesen von Schalterstellungen zum Konfigurieren einer Sicherheitsschaltvorrichtung zu ermöglichen.

Diese Aufgabe wird durch eine Sicherheitsschaltvorrichtung, insbesondere ein Sicherheitsrelais, mit einer Vielzahl von Schalterelementen sowie ein Verfahren zum Einstellen mindestens eines Betriebsparameters nach Anspruch 1 beziehungsweise 12 gelöst. Die Sicherheitsschaltvorrichtung hat die Funktion, in Abhängigkeit von einem Eingangssignal beispielsweise einer berührungslos wirkenden Schutzvorrichtung (BWS) einen an ihrem Ausgang oder Ausgangskontakt angeschlossenen Aktor sicher ein- oder auszuschalten, insbesondere eine überwachte Maschine in einen sicheren Zustand zu versetzen. Dabei bedeutet sicher oder Sicherheit, dass Fehlersicherheit auf einem Sicherheitsniveau entsprechend einer Sicherheitsnorm erreicht wird, beispielsweise durch mehrkanaligen Aufbau, zyklische Tests und dergleichen Maßnahmen wie einleitend schon erwähnt.

Um einen Betriebsparameter einzustellen, weist die Sicherheitsschaltvorrichtung eine Vielzahl von Schalterelementen auf, die ein Anwender bedienen und dazu wahlweise zwischen zwei Zuständen umlegen kann, die hier manchmal als aktiv und inaktiv bezeichnet werden. Vorsichtshalber sei erwähnt, dass diese Schalterelemente nichts mit der eigentlichen Schaltfunktion der Sicherheitsschaltvorrichtung zu tun haben, sondern eine Eingabemöglichkeit für eine Konfiguration darstellen.

Zu den derart eingestellten Schalterelementen ist intern in einer Steuer- und Auswertungseinheit ein zugehöriger Wert oder Zustand für einen Betriebsparameter hinterlegt. Die Steuer- und Auswertungseinheit wertet die Schalterstellungen aus und setzt dementsprechend den Betriebsparameter. Die Steuer- und Auswertungseinheit ist vorzugsweise fehlersicher aufgebaut, insbesondere indem sie zwei digitale Bausteine etwa in Form zweier Mikrocontroller aufweist.

Die Erfindung geht von dem Grundgedanken aus, eine Ausleseeinrichtung mit mindestens einem Schieberegister eingangsseitig mit den Schalterelementen und ausgangsseitig mit der Steuer- und Auswertungseinheit zu verbinden, um so die Schalterstellungen seriell zu übertragen. Ein Ausgang des Schieberegisters ist dabei auf einen Eingang des Schieberegisters über ein Logikelement zurückgeführt, um Checkbits zu generieren. Vorzugsweise wird dazu derselbe Ausgang genutzt, über den auch die Steuer- und Auswertungseinheit die Schalterstellungen ausliest, es kann aber auch ein anderes Bit im Schieberegister zurückgeführt werden. Die Steuer- und Auswertungseinheit prüft die Integrität der eingelesenen Schalterstellungen anhand der Checkbits.

Die Erfindung hat den Vorteil, dass das Einlesen der Schalterstellungen mit sehr einfachen Hardwaremitteln abgesichert wird. Eine Konfiguration kann insbesondere mit weniger Microcontroller-Ressourcen (GPIO) eingelesen werden, ohne dabei das Risiko einer fehlerhaften Konfiguration zu erhöhen. Die Systemarchitektur wird einfacher und somit zugleich günstiger und weniger fehleranfällig.

Der Betriebsparameter weist bevorzugt eine Verzögerungszeit und/oder eine Veränderung der Auswertung mindestens eines Eingangs der Sicherheitsschaltvorrichtung auf. Die Verzögerungszeit ist ein Beispiel für einen Betriebsparameter, dem ein Wert zugeordnet werden soll. Die Schalterelemente bieten dafür beispielsweise eine Vielzahl möglicher Werte an, zwischen denen ausgewählt werden kann. Betriebsparameter können aber auch im Sinne eines zu wählenden Betriebsmodus' verstanden werden. Dann sind beispielsweise mehrere sichere Auswertungsprogramme in der Steuer- und Auswertungseinheit abgelegt, von denen eines aktiviert wird, oder es werden Parameter solcher Auswertungsprogramme gesetzt. Ein Auswertungsprogramm bestimmt, ob die eingangsseitig anliegenden Signale zu einem Schalten am Ausgang führen oder nicht, beispielsweise ob ein Sicherheitsrelais seine Kontakte öffnet. Durch Konfiguration des Auswertungsprogramms lässt sich dieselbe Sicherheitsschaltvorrichtung für verschiedene Anwendungen nutzen, beispielsweise kann die Sicherheitsschaltvorrichtung dann wahlweise Signale eines eingangsseitig angeschlossenen OSSD (Output Signal Switching Device) eines Sensors, einen Not-Halt-Schalter oder Trittmatten auswerten.

Die Ausleseeinrichtung weist bevorzugt mehrere in Serie miteinander verbundene Schieberegister auf ("Daisy-Chain-Anordnung"). Dadurch entsteht, funktional betrachtet, ein größeres Schieberegister, etwa ein 16-Bit-Schieberegister aus zwei 8-Bit-Schieberegistern. Die in Serie verbundenen Schieberegister können eine größere Anzahl von Schalterstellungen aufnehmen.

Die Ausleseeinrichtung weist bevorzugt nur Schieberegister zum Aufnehmen von Schalterstellungen auf, die in Doppelfunktion über das Logikelement auch die Checkbits erzeugen. Sämtliche vorhandenen Schieberegister in der Ausleseeinrichtung werden also tatsächlich für das eigentliche Auslesen verwendet. Zusätzlich wird zumindest eines der Schieberegister auch für die Erzeugung der Checkbits eingesetzt. Es gibt kein zusätzliches Schieberegister, das nur für die Checkbits zuständig ist. Dadurch ist die Ausleseeinrichtung besonders einfach und kostengünstig.

Das Schieberegister weist bevorzugt mehrere erste Eingänge auf, die als parallele Eingänge ausgebildet sind, wobei die Schalterelemente mit jeweils einem ersten Eingang verbunden sind. Sind mehrere Schieberegister vorhanden, so gilt das vorzugsweise für alle Schieberegister. Beispielsweise hat ein Schieberegister acht parallele erste Eingänge. Bei mehr als acht Schalterelementen werden die Schalterelemente dann entsprechend auf die ersten Eingänge mehrerer Schieberegister verteilt. Es werden sogleich Ausführungsformen eingeführt, in denen einige der ersten Eingänge für andere Zwecke verwendet werden, womit dann nicht alle in diesem Beispiel acht ersten Eingänge eines Schieberegisters für Schalterelemente zur Verfügung stehen. Es werden dann entsprechend mehr Schieberegister benötigt.

Mindestens ein erster Eingang ist vorzugsweise als Fixeingang auf High oder Low festgelegt. Dementsprechend besteht eine feste Erwartung, welche Bits an diesen Positionen eingelesen werden müssen. Besonders bevorzugt ist mindestens ein Fixeingang am Anfang und/oder Ende des Schieberegisters vorgesehen. Damit sind das oder die ersten und/oder letzten parallelen ersten Eingänge eines Schieberegisters gemeint. Im Falle mehrerer in Serie miteinander verbundener Schieberegister ist der Anfang des ersten Schieberegisters und das Ende des letzten Schieberegisters gemeint.

Die Steuer- und Auswertungseinheit ist bevorzugt dafür ausgebildet, das korrekte Einlesen der Zustände der Fixeingänge zu prüfen. Die Steuer- und Auswertungseinheit prüft also die Integrität der eingelesenen Daten unter Ausnutzung der festen Erwartung an die Zustände der Fixeingänge. Dabei lassen sich durch mehrere Fixeingänge auch Kennungen erzeugen, etwa High-Low-High, die insbesondere Anfangs- und Endkennungen sind.

Der zweite Eingang ist bevorzugt als serieller Eingang ausgebildet. Dieser serielle Eingang (Serial-In) dient am Anfang des Schieberegisters der Rückkopplung zur Erzeugung der Checkbits. Bei mehreren Schieberegistern in Serie werden zweite Eingänge der nachfolgenden Schieberegister für die serielle Verbindung genutzt.

Das Logikelement ist bevorzugt ein XOR-Element, das Paritätsbits als Checkbits erzeugt und dessen beide XOR-Eingänge mit unterschiedlichen Ausgängen des Schieberegisters verbunden sind. Einer der XOR-Eingänge ist vorzugsweise mit demselben Ausgang verbunden, über den die Schalterstellungen an die Steuer- und Auswertungseinheit übertragen werden. Der andere XOR-Eingang ist mit einem anderen Bit des Schieberegisters verbunden. Jedenfalls werden zwei unterschiedliche Bits des Schieberegisters zu einem Paritätsbit verknüpft. Die Paritätsbits werden dann mittels des zweiten Eingangs dem ausgelesenen Bitstrom angehängt. Bei mehreren Schieberegistern in Serie sind die Eingänge des XOR-Elements vorzugsweise mit den Ausgängen von zwei der Schieberegister verbunden. Das XOR hängt sich damit sozusagen in die Übertragungswege zwischen den Schieberegistern ein, wo ohnehin ein Ausgang vorhanden sein muss. Bevorzugt wird dazu das letzte Schieberegister und ein weiteres Schieberegister genutzt, beispielsweise das erste oder das vorletzte Schieberegister.

Die Ausleseeinrichtung ist bevorzugt einkanalig ausgebildet. Die erforderliche Fehlersicherheit wird durch das Prüfen der Checkbits hergestellt. Vorzugsweise sind auch die Schalterelemente nur einfach vorhanden, und nur ein Digitalbaustein beziehungsweise Microcontroller der Steuer- und Auswertungseinheit liest die Schalterstellungen aus. Zwar ist bevorzugt ein zweiter Digitalbaustein der Steuer- und Auswertungseinheit vorgesehen, wobei sich die beiden Digitalbausteine gegenseitig überprüfen, damit sie fehlersicher sind. Nur einer davon übernimmt aber in dieser bevorzugten Ausführungsform das Einlesen. Die eingelesenen Daten werden anschließend intern in der Steuer- und Auswertungseinheit auf den anderen Digitalbaustein übertragen. Dort wird anhand der Checkbits zumindest ein Großteil der möglichen Übertragungsfehler erkannt, und ungültige Konfigurationen werden verworfen.

Die Steuer- und Auswertungseinheit ist bevorzugt dafür ausgebildet, die Schalterstellungen mehrfach einzulesen und auf Konsistenz über die mehreren Einlesevorgänge hinweg zu prüfen. Das erhöht die Fehlersicherheit noch weiter. Es kann verlangt werden, dass die eingelesenen Bits in m aus n Wiederholungen übereinstimmen müssen, insbesondere in allen Wiederholungen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Überblicksdarstellung einer Sicherheitsschaltvorrichtung mit eingangsseitiger berührungslos wirkender Schutzvorrichtung und ausgangsseitiger zu überwachender Maschine;
- Fig. 2: einen vereinfachten Schaltplan einer Ausleseeinrichtung mit zwei Schieberegistern zum einkanaligen Übertragen der Schalterstellungen an eine Steuer- und Auswertungseinrichtung;
- Fig. 3: einen beispielhaften seriellen Bitstrom der Ausleseeinrichtung gemäß Figur 2; und
- Fig. 4: eine Darstellung einer Ausführungsform der Ausleseeinrichtung mit mehr als zwei Schieberregistern.

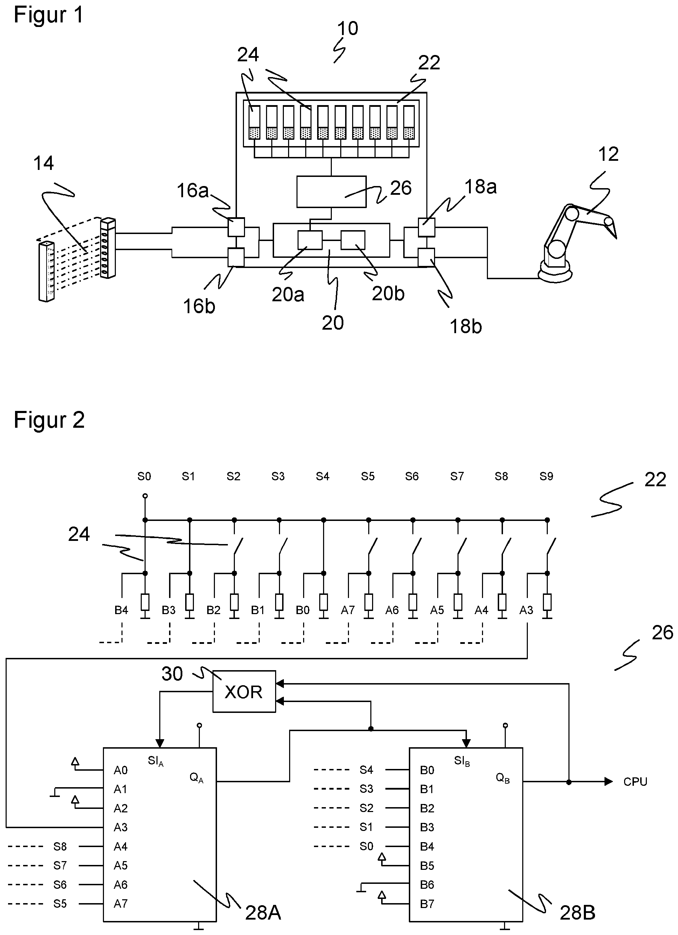

Figur 1 zeigt eine Überblicksdarstellung einer Sicherheitsschaltvorrichtung 10, die beispielsweise als Sicherheitsrelais ausgebildet ist, in einer Anwendung zur Absicherung einer Maschine 12 mithilfe einer berührungslos wirkenden Schutzeinrichtung 14. Diese Anwendung ist nur als Beispiel zu verstehen, insbesondere sind mehrere und andere eingangsseitige Signalgeber anstelle eines Lichtgitters und andere Schaltaufgaben als das Stillsetzen eines Roboterarms denkbar.

Die Sicherheitsschaltvorrichtung 10 weist einen zweikanalig ausgebildeten Eingang 16a-b, an dem die berührungslos wirkende Schutzeinrichtung angeschlossen ist, sowie einen ebenfalls zweikanalig ausgebildeten Ausgang 18a-b auf, der geschaltet werden soll und an dem die Maschine 12 angeschlossen ist. Eine Steuer- und Auswertungseinheit 20 wertet die eingangsseitigen Signale aus und entscheidet anhand eines Auswertungsprogramms, ob und wann der Ausgangs 18a-b geschaltet wird. Ein typischer Schaltvorgang besteht darin, die Maschine durch Öffnen eines als Relaiskontakt ausgebildeten Ausgangs 18a-b stromlos zu setzen.

Die Sicherheitsschaltvorrichtung 10 ist ein fehlersicher ausgebildetes Gerät im Sinne von Sicherheitsnormen, wie dies einleitend kurz diskutiert wurde. Im dargestellten Beispiel sind dazu zweikanalige Eingänge 16a-b und Ausgänge 18a-b vorgesehen. Die Steuer- und Auswertungseinheit 20 ist hier ebenfalls zweikanalig ausgebildet, wofür zwei einander gegenseitig überwachenden CPUs oder Mikrocontroller 20a-b vorgesehen sind. Andere Maßnahmen wie zyklische Tests sind ebenfalls möglich, sowohl hinsichtlich der Anschlüsse 16a-b, 18a-b als auch der Steuerung und Auswertung.

Die Sicherheitsschaltvorrichtung 10 weist eine Schalteranordnung 22 mit einer Vielzahl von Schalterelementen 24 auf, insbesondere DiP-Schalter. Damit werden Betriebsparameter der Sicherheitsschaltvorrichtung 10 gesetzt oder verändert, etwa eine Verzögerungszeit eingestellt, mit der die Ausgänge 18a-b schalten, oder das Auswertungsprogramm ausgewählt beziehungsweise parametriert, mit dem die Steuer- und Auswertungseinheit 20 über das Schalten entscheidet.

Die Schalterstellungen der Schalterelemente 24 werden von der Steuer- und Auswertungseinheit 20 über ein Ausleseeinrichtung 26 erfasst. Dieser Auslesevorgang soll erfindungsgemäß bevorzugt nur einkanalig erfolgen, weshalb in Figur 1 nur einer der beiden Microcontroller 20a mit der Ausleseeinrichtung 26 verbunden ist. Die eingelesenen Schalterstellungen werden dann intern von dem einen Microcontroller 20a an den anderen Microcontroller 20b weitergegeben.

Beim einkanaligen Auslesen besteht das Problem des Verlustes der Vertrauenswürdigkeit der Daten. Es gibt nun keinen zweiten Kanal mehr, der sicherstellt, ob die Daten richtig eingelesen wurden, vom einlesenden Micocontroller 20a nicht verfälscht wurden und korrekt vom einlesenden Microcontroller 20a zum zweiten Microcontroller 20b übermittelt wurden. Deshalb werden erfindungsgemäß die eingelesenen Daten anhand von Checkbits geprüft, und das wird nun erläutert.

Figur 2 zeigt einen vereinfachten Schaltplan einer Ausführungsform der Schalteranordnung 22 und der Ausleseeinrichtung 26. In diesem Beispiel sind es zehn Schalterelemente SO..S9, von denen rein beispielhaft die Schalterelemente S0, S1 und S4 geschlossen und damit aktiv und die übrigen geöffnet und damit inaktiv sind.

Die Schalterelemente S0... S9 sind mit einer Vielzahl paralleler Eingänge A0..A7; B0.. B7 zweier in Serie geschalteter Schieberegister 28A-B verbunden. Als Schieberegister 28A-B kann beispielsweise ein 74HC165 mit acht parallelen Eingängen A0..A7;B0..B7 eingesetzt werden, aber auf die konkrete Hardwareausführung sowie die Anzahl acht der Eingänge A0... A7; B0.. B7 je Schieberegister 28A-B kommt es für die Erfindung nicht an. Der Vorteil des seriellen Einlesens mit Hilfe von Schieberegistern 28A-B ist, dass unabhängig von der möglicherweise auch großen Anzahl von Schalterelementen 24 nur ein Input (GPIO) an dem Microcontrollers 20a belegt wird.

Die beiden Schieberegister 28A-B sind in Serie geschaltet, um effektiv ein größeres Schieberegister mit sechzehn parallelen Eingängen A0...A7;B0..B7 zu erhalten. Dazu wird der Ausgang Q_{A} des ersten Schieberegisters 28A mit einem seriellen Eingang SI_{B} des zweiten Schieberegisters verbunden.

Der Ausgang Q_{B} des zweiten Schieberegisters 28B ist einerseits mit CPU, dem Microcontroller 20a verbunden. Hier wird also ein Bitstrom entsprechend den parallelen Eingängen A0...A7;B0..B7 einschließlich der Schalterzustände der damit verbundenen Schalterelemente S0... S9 ausgegeben.

Außerdem wird der Ausgang Q_{B} über ein Logikelement 30 auf den seriellen Eingang SI_{A} des ersten Schieberegisters 28A zurückgeführt. Das Logikelement 30 verknüpft das jeweils an Q_{B} ausgegebene Bit mit einem anderen Bit des Schieberegisters 28A-B. Dazu wird vorzugsweise auch der Ausgang Q_{A} des ersten Schieberegisters 28A zurückgeführt und dazu mit einem weiteren Eingang des Logikelements 30 verknüpft. Alternativ wäre ein zusätzlicher Ausgang für eine andere Position Bit des Schieberegisters 28A denkbar. Jedenfalls werden dem ausgegebenen Bitstrom Checkbits nachgeschoben, anhand derer die Steuer- und Auswertungseinheit 20 die Integrität der eingelesenen Schalterzustände prüft. Bevorzugt ist das Logikelement 30 als XOR-Element ausgeführt, etwa in Form eines 74AHC1G86 ICs. Bei einer solchen XOR-Logik wird aus jeweils zwei Bits des Schieberegisters 28A-B je ein Paritätsbit erzeugt und an den Bitstrom der Schalterzustände angehängt. Der einzulesende Bitstrom wird damit insgesamt noch einmal um die Hälfte verlängert, und das ist eine gewünschte Redundanz, welche die Überprüfung der Integrität ermöglicht.

Um die Sicherheit weiter zu erhöhen, können optional einige der Eingänge A0..A7;B0..B7 fest mit Low oder High belegt werden. Im Beispiel der Figur 2 sind das jeweils die ersten und letzten Eingänge A0..A2;B5..B7, die mit dem Muster High-Low-High eine Anfangs- und Endkennung bilden, d. h. die Zustände der Schalterelemente S0...S9 liegen zwischen diesen Kennungen.

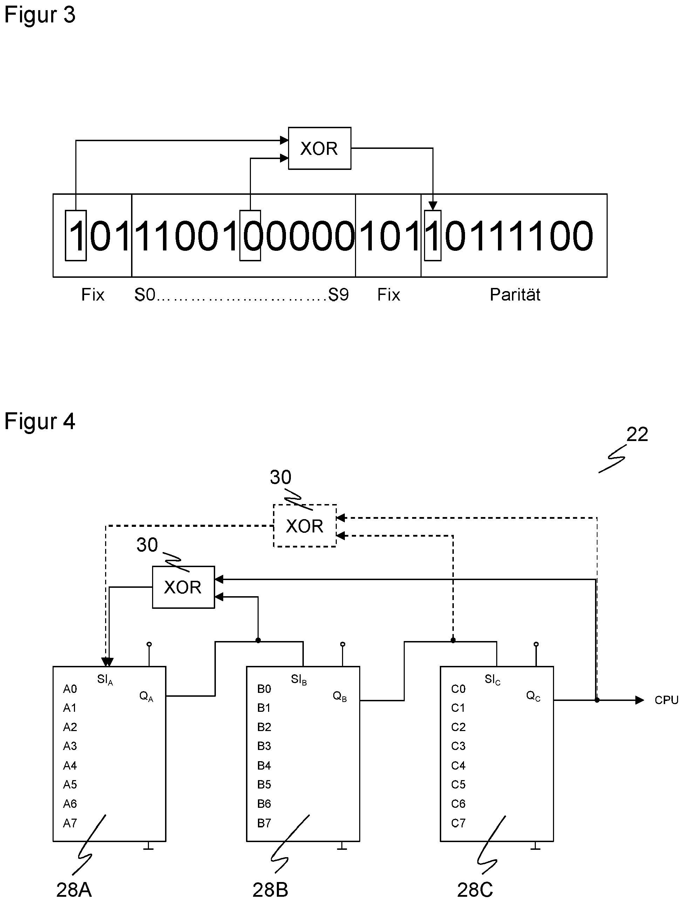

Figur 3 zeigt beispielhaft den Bitstrom, der in der Situation der Figur 2 ausgegeben wird. Dabei werden die Bits zuerst an den Eingängen A0..A7;B0..B7 mit der höchsten Ordnungszahl an Q_{B} des zweiten Schieberegisters 28B ausgegeben, also an der Reihenfolge B7... B0. Entsprechend schiebt das erste Schieberegister 28A in diese Reihenfolge A7...A0 über Q_{A} an SI_{B} nach.

Somit beginnt der Bitstrom mit den drei Fixbits 101 von den Eingängen B7..B5. Es folgen die Schalterzustände S0...S4 an den Eingängen B4... B0 des zweiten Schieberegisters 28B, dann die über SI_{B} nachgeschobenen Schalterzustände S5..S9 an den Eingängen A7..A3 des ersten Schieberegisters 28A. Das ergibt, da in Figur 2 beispielhaft die Schalterelemente S0, S1, S4 geschlossen sind, das Bitmuster 1100100000. Den Abschluss des ursprünglichen Inhalts des Schieberegisters 28A-B bildet die Endkennung 101 an den Eingängen A2..A0.

Aufgrund der Rückkopplung über das Logikelement 30 sind dann noch die Paritätsbits angehängt, nämlich B7 XOR A7 ... B0 XOR A0 als das sich daraus ergebende Bitmuster 10111100. Die Steuer- und Auswertungseinheit 20 kann die Integrität des Bitstroms anhand dieser Paritätsbits prüfen, und zwar sowohl im Microcontroller 20a nach Auslesen aus dem Schieberegister 28a-b als auch im Microcontroller 20b, an den der Microcontroller 20a den Bitstrom kopiert.

Um die Sicherheit durch zeitliche Redundanz weiter zu erhöhen, kann der Einlesevorgang n-mal durchgeführt werden, und die eingelesenen Bits werden verglichen. Dabei kann je nach Sicherheitsniveau gefordert werden, dass in jeder Wiederholung oder in m aus n Wiederholungen dieselben Bits gelesen wurden.

Figur 2 zeigt eine Ausführungsform mit zwei in Serie geschalteten Schieberegistern 28A-B. Es sind auch Ausführungsformen mit nur einem einzigen Schieberegister denkbar, sofern es bereits so viele Eingänge bereitstellt, wie Schalterelemente ausgelesen werden sollen, möglicherweise außerdem weitere Eingänge für Fixbits. In diesem Fall müsste neben Q ein weiterer Ausgang des Schieberegisters zur Verfügung stehen, um die Verknüpfung mit einem mit dem anderen Bit beziehungsweise Schalterzustand in dem Logikelement 30 zu ermöglichen.

Figur 4 zeigt umgekehrt eine Ausführungsform mit mehr als zwei Schieberegistern 28A-C. Es sind auch mehr als drei Schieberegister 28A-C denkbar. Am grundsätzlichen Aufbau und an der Funktionsweise ändert sich dadurch nichts. Es bestehen lediglich mehr Möglichkeiten, welche Bits in den Schieberegistern 28A-C über das Logikelement 30 zurückgeführt werden. Dazu können wie bisher prinzipiell zwei beliebige verschiedene Positionen in den Schieberegistern 28A-C herangezogen werden. Um alle Schalterstellungen abzusichern, sollte aber vorzugsweise eine der verwendeten Positionen die letzte sein, an der auch die Ausgabe an den Microcontroller 20a erfolgt, also hier Qc. Vorteilhaft ist wiederum, auch für den an sich beliebigen anderen Eingang die ohnehin vorhandenen Ausgänge Q_{A}..Q_{B} zu nutzen. In Figur 4 sind zwei Möglichkeiten mit durchgezogenen beziehungsweise gestrichelten Linien eingezeichnet. Dabei wird ein Eingang des Logikelements 30 jeweils mit dem Ausgang Qc des letzten Schieberegisters 28C verbunden. Der andere Eingang des Logikelements 30 ist mit dem Ausgang Q_{A} des ersten Schieberegisters 28A oder dem Ausgang Q_{B} des zweiten beziehungsweise vorletzten Schieberegisters 28B verbunden.

Im Fall von mehr als drei Schieberegistern gibt es diese Möglichkeiten ebenfalls, das erste und das letzte, das zweite und das letzte beziehungsweise das vorletzte und das letzte Schieberegister rückzukoppeln, es kommen weitere Kombinationsmöglichkeiten hinzu. Je nach Konstellation kann es dazu kommen, auch bereits in der Situation der Figur 4, dass Paritätsbits nicht mehr zwischen ursprünglichen Eingängen A0..A7;B0..B7;C0..C7 erzeugt werden, sondern mit bereits am seriellen Eingang SI_{A} angehängten Paritätsbits. Das ändert aber nichts an der Redundanz der Daten, die weiterhin für eine Prüfung der Integrität herangezogen werden können.

Somit kann für jede Anzahl von Schalterelementen 24 plus gewünschter Fixbits eine passende Anzahl von Schieberegistern gefunden werden, auf deren Eingänge die Schalterelemente 24 entsprechend Figur 2 verteilt werden. Das gelingt für jede Vorgabe der Länge der einzelnen Schieberegister, die hier beispielhaft mit acht angenommen wurde. Die Reihenfolge der Verschaltung spielt dabei keine Rolle, da die Steuer- und Auswertungseinheit 20 jede Reihenfolge berücksichtigen oder wiederherstellen kann. Somit kann über eine feste Anzahl von Eingängen (GPIO) des Microcontrollers 20a eine beliebige Anzahl von Schalterelementen 24 und gegebenenfalls Fixbits eingelesen werden.

## Patentansprüche

1. Sicherheitsschaltvorrichtung (10), insbesondere Sicherheitsrelais, mit einer Vielzahl von Schalterelementen (24; S0... S9) zum Einstellen mindestens eines Betriebsparameters der Sicherheitsschaltvorrichtung (10), und mit einer Steuer- und Auswertungseinheit (20; 20a-b), die dafür ausgebildet ist, den Betriebsparameter anhand der Schalterstellungen der Schalterelemente (24; S0... S9) einzustellen,
**dadurch gekennzeichnet,**
**dass** die Sicherheitsschaltvorrichtung weiterhin eine Ausleseeinrichtung (26) und ein Logikelement (30) aufweist, dass die Ausleseeinrichtung (26) zwischen den Schalterelementen (24; S0... S9) und der Steuer- und Auswertungseinheit (20; 20a-b) vorgesehen ist und mindestens ein Schieberegister (28A-B) aufweist, das mit mindestens einem ersten Eingang (A0..A7; B0..B7) mit den Schalterelementen (24; S0..S9) und mit einem Ausgang (O_{A}, Q_{B}) mit der Steuer- und Auswertungseinheit (20; 20a-b) verbunden ist, um so die Schalterstellungen seriell zu übertragen, dass ein Ausgang (Q_{A}, Q_{B}), des mindestens einen Schieberegisters (28A-B) über das Logikelement (30) auf einen zweiten Eingang (SI_{A}) des mindestens einen j z Schieberegisters (28A-B) zurückgeführt ist, um das jeweils an dem Ausgang (Q_{A}, Q_{B}) ausgegebene Bit mit einem anderen Bit des mindestens einen Schieberegisters (28A-B) zu verknüpfen und so Checkbits zu erzeugen, und dass die Steuer- und Auswertungseinheit (20; 20a-b) dafür ausgebildet ist, die Integrität der mittels der Ausleseeinrichtung (26) eingelesenen Schalterstellungen (24; S0..S9) anhand der Checkbits zu prüfen.

2. Sicherheitsschaltvorrichtung (10) nach Anspruch 1,
wobei der Betriebsparameter eine Verzögerungszeit und/oder eine Veränderung der Auswertung mindestens eines Eingangs (16a-b) der Sicherheitsschaltvorrichtung (10) aufweist.

3. Sicherheitsschaltvorrichtung (10) nach Anspruch 1 oder 2,
wobei die Ausleseeinrichtung (26) mehrere in Serie miteinander verbundene Schieberegister (28A-B; 28A-C) aufweist.

4. Sicherheitsschaltvorrichtung (10) nach einem der vorhergehenden Ansprüche,
wobei die Ausleseeinrichtung (26) nur Schieberegister (28A-B) zum Aufnehmen von Schalterstellungen (S0..S9) aufweist, die in Doppelfunktion über das Logikelement (30) auch die Checkbits erzeugen.

5. Sicherheitsschaltvorrichtung (10) nach einem der vorhergehenden Ansprüche,
wobei das mindestens eine Schieberegister (28A-B) mehrere erste Eingänge (A0..A7; B0..B7) aufweist, die als parallele Eingänge ausgebildet sind, und wobei die Schalterelemente (24; S0..S9) mit jeweils einem ersten Eingang (A0..A7; B0..B7) verbunden sind.

6. Sicherheitsschaltvorrichtung (10) nach Anspruch 5,
wobei mindestens ein erster Eingang (A0..A2; B5..B7) als Fixeingang auf High oder Low festgelegt ist, insbesondere am Anfang und/oder Ende des mindestens einen Schieberegisters (28A-B).

7. Sicherheitsschaltvorrichtung (10) nach Anspruch 6,
wobei die Steuer- und Auswertungseinheit (20; 20a-b) dafür ausgebildet ist, das korrekte Einlesen der Zustände der Fixeingänge zu prüfen, insbesondere als Anfangskennung und/oder Endkennung.

8. Sicherheitsschaltvorrichtung (10) nach einem der vorhergehenden Ansprüche,
wobei der zweite Eingang (SI_{A}) als serieller Eingang ausgebildet ist.

9. Sicherheitsschaltvorrichtung (10) nach einem der vorhergehenden Ansprüche,
wobei das Logikelement (30) ein XOR-Element ist, das Paritätsbits als Checkbits erzeugt und dessen beide XOR-Eingänge mit unterschiedlichen Ausgängen (Q_{A}, Q_{B}) des mindestens einen Schieberegisters (28A-B) verbunden sind, insbesondere mit dem Ausgang (Qc) des letzten Schieberegisters (28C) und dem Ausgang (Q_{A}, Q_{B}) eines weiteren Schieberegisters (28A, 28B) von mehreren in Serie miteinander verbundenen Schieberegistern (28A-C).

10. Sicherheitsschaltvorrichtung (10) nach einem der vorhergehenden Ansprüche,
wobei die Ausleseeinrichtung (26) einkanalig ausgebildet ist.

11. Sicherheitsschaltvorrichtung (10) nach einem der vorhergehenden Ansprüche,
wobei die Steuer- und Auswertungseinheit (20; 20a-b) dafür ausgebildet ist, die Schalterstellungen mehrfach einzulesen und auf Konsistenz über die mehreren Einlesevorgänge hinweg zu prüfen.

12. Verfahren zum Einstellen mindestens eines Betriebsparameters einer Sicherheitsschaltvorrichtung (10), insbesondere eines Sicherheitsrelais, wobei der Betriebsparameter von einer Steuer- und Auswertungseinheit (20; 20a-b) der Sicherheitsschaltvorrichtung (10) entsprechend der Schalterstellungen einer Vielzahl von Schalterelementen (24; S0..S9) eingestellt wird,
**dadurch gekennzeichnet,**
**dass** zum einkanaligen Auslesen die Schalterstellungen in mindestens ein Schieberegister (28A-B) der Sicherheitsschaltvorrichtung (10) eingelesen und seriell von dem mindestens einen Schieberegister (28A-B) an die Steuer- und Auswertungseinheit (20; 20a-b) ausgegeben werden, wobei das Schieberegister (28A-B) mit mindestens einem ersten Eingang (A0...A7;B0... B7) mit den Schalterelementen (24;S0...S9) und mit einem Ausgang (Q_{A}, Q_{B}) mit der Steuer- und Auswertungseinheit (28A-B) verbunden ist, dass das mindestens eine Schieberegister (28A-B) einen Ausgang (Q_{A}, Q_{B}) über ein Logikelement (30) der Sicherheitsschaltvorrichtung (10) auf einen zweiten Eingang (SI_{A}) des mindestens einen Schieberegisters (28A-B) zurückführt, um das jeweils an dem Ausgang (Q_{A}, Q_{B}) ausgegebene Bit mit einem anderen Bit des mindestens einen Schieberegisters (28A-B) zu verknüpfen und so Checkbits zu erzeugen, und dass die Integrität der eingelesenen Schalterstellungen anhand der Checkbits geprüft wird.

## Claims

1. A safety switching apparatus (10), in particular a safety relay, having a plurality of switch elements (24; S0...S9) for setting at least one operating parameter of the safety switching apparatus (10), and having a control and evaluation unit (20; 20a-b) which is configured to set the operating parameter on the basis of the switch positions of the switch elements (24; S0 ... S9),
**characterized in that** the safety switching apparatus further comprises a read-out device (26) and a logic element (30), **in that** the read-out device (26) is provided between the switch elements (24; S0...S9) and the control and evaluation unit (20; 20a-b) and comprises at least one shift register (28A-B) which is connected to the switch elements (24; S0....S9) with at least one first input (A0..A7; B0..B7) and to the control and evaluation unit (20; 20a-b) with an output (Q_{A}, Q_{B}) in order to serially transmit the switch positions, **in that** an output (Q_{A}, Q_{B}) of the at least one shift register (28A-B) is fed back to a second input (SI_{A}) of the shift register (28A-B) via the logic element (30) in order to combine the respective bit output at the output (Q_{A}, Q_{B}) with another bit of the at least one shift register (28A-B) and thus to generate check bits, and **in that** the control and evaluation unit (20; 20a-b) is configured to check the integrity of the read switch positions (24; S0..S9) by means of the check bits.

2. The safety switching apparatus (10) according to claim 1,
wherein the operating parameter comprises a delay time and/or a change in the evaluation of at least one input (16a-b) of the safety switching apparatus (10).

3. The safety switching apparatus (10) according to claim 1 or 2,
wherein the readout device (26) comprises a plurality of shift registers (28A-B; 28A-C) connected in series.

4. The safety switching apparatus (10) according to any of the preceding claims,
wherein the readout device (26) comprises only shift registers (28A-B) for recording switch positions (S0.. S9), which also generate the check bits in a dual function via the logic element (30).

5. The safety switching apparatus (10) according to any of the preceding claims, wherein the at least one shift register (28A-B) has a plurality of first inputs (A0..A7; B0..B7) which are configured as parallel inputs, and wherein the switch elements (24; S0..S9) are each connected to a first input (A0..A7; B0..B7).

6. The safety switching apparatus (10) according to claim 5,
wherein at least one first input (A0.. A2; B5..B7) is set to high or low as a fixed input, in particular at the beginning and/or end of the at least one shift register (28A-B).

7. The safety switching apparatus (10) according to claim 6,
wherein the control and evaluation unit (20; 20a-b) is configured to check the correct reading of the states of the fixed inputs, in particular as an initial identifier and/or a final identifier.

8. The safety switching apparatus (10) according to any of the preceding claims,
wherein the second input (SI_{A}) is configured as a serial input.

9. The safety switching apparatus (10) according to any of the preceding claims,
wherein the logic element (30) is an XOR element which generates parity bits as check bits and whose two XOR inputs are connected to different outputs (Q_{A}, Q_{B}) of the at least one shift register (28AB), in particular to the output (Qc) of the last shift register (28C) and the output (Q_{A}, Q_{B}) of a further shift register (28A, 28B) of a plurality of shift registers (28A-C) connected in series.

10. The safety switching apparatus (10) according to any of the preceding claims,
wherein the readout device (26) is of single-channel design.

11. The safety switching apparatus (10) according to any of the preceding claims,
wherein the control and evaluation unit (20; 20a-b) is configured to read in the switch positions multiple times and to check for consistency across the multiple read-in operations.

12. A method for setting at least one operating parameter of a safety switching apparatus (10), in particular of a safety relay, wherein the operating parameter is set by a control and evaluation unit (20; 20a-b) of the safety switching apparatus (10) in accordance with the switch positions of a plurality of switch elements (24; S0.. S9),
**characterized in that**, for single-channel readout, the switch positions are read into at least one shift register (28A-B) of the safety switching apparatus (10) and are serially output from the at least one shift register (28A-B) to the control and evaluation unit (20; 20a-b), wherein the shift register (28A-B) is connected to the switch elements (24; S0....S9) with at least one first input (A0..A7; B0..B7) and to the control and evaluation unit (20; 20a-b) with an output (Q_{A}, Q_{B}), **in that** the at least one shift register (28A-B) feeds an output (Qₐ, Q_{b}) of the at least one shift register (28A-B) back to a second input (SI_{A}) of the at least one shift register (28A-B) via a logic element (30) of the safety switching apparatus (10) in order to combine the respective bit output at the output (Qₐ, Q_{b}) with another bit of the at least one shift register (28A-B) and thus to generate check bits, and **in that** the integrity of the read switch positions is checked on the basis of the check bits.

## Revendications

1. Dispositif de commutation de sécurité (10), en particulier relais de sécurité, comprenant une pluralité d'éléments de commutation (24 ; S0 ... S9) pour régler au moins un paramètre de fonctionnement du dispositif de commutation de sécurité (10), et une unité de commande et d'évaluation (20 ; 20a-b) qui est conçue pour régler le paramètre de fonctionnement en se basant sur les positions de commutation des éléments de commutation (24 ; S0 ... S9), **caractérisé en ce que** le dispositif de commutation de sécurité comprend en outre un organe de lecture (26) et un élément logique (30), **en ce que** l'organe de lecture (26) est prévu entre les éléments de commutation (24 ; S0 ... S9) et l'unité de commande et d'évaluation (20 ; 20a-b), et il est prévu au moins un registre à décalage (28A-B) qui est relié par au moins une première entrée (A0..A7 ; B0..B7) aux éléments de commutation (24 ; S0 ... S9) et par une sortie (Q_{A}, Q_{B}) à l'unité de commande et d'évaluation (20 ; 20a-b), afin de transmettre ainsi en série les positions de commutation, **en ce qu'**une sortie (Q_{A}, Q_{B}) dudit au moins un registre à décalage (28A-B) retourne par l'intermédiaire de l'élément logique (30) à une deuxième entrée (SI_{A}) dudit au moins un registre à décalage (28A-B), afin de lier le bit respectif, émis à la sortie (Q_{A}, Q_{B}), à un autre bit dudit au moins un registre à décalage (28A-B) et de générer ainsi des bits de contrôle, et **en ce que** l'unité de commande et d'évaluation (20 ; 20a-b) est réalisée pour vérifier l'intégrité des positions de commutation (24 ; S0..S9), lues au moyen de l'organe de lecture (26), en se basant sur les bits de contrôle.

2. Dispositif de commutation de sécurité (10) selon la revendication 1,
dans lequel le paramètre de fonctionnement comprend un temps de retard et/ou une modification de l'évaluation d'au moins une entrée (16a-b) du dispositif de commutation de sécurité (10).

3. Dispositif de commutation de sécurité (10) selon la revendication 1 ou 2,
dans lequel l'organe de lecture (26) comprend plusieurs registres à décalage (28A-B ; 28A-C) connectés en série.

4. Dispositif de commutation de sécurité (10) selon l'une des revendications précédentes, dans lequel l'organe de lecture (26) ne comprend que des registres à décalage (28A-B) pour enregistrer des positions de commutation (S0..S9), qui génèrent également les bits de contrôle dans une double fonction par l'intermédiaire de l'élément logique (30).

5. Dispositif de commutation de sécurité (10) selon l'une des revendications précédentes, dans lequel ledit au moins un registre à décalage (28A-B) présente plusieurs premières entrées (A0..A7 ; B0..B7) qui sont réalisées sous forme d'entrées parallèles, et les éléments de commutation (24 ; S0..S9) sont chacun reliés à une première entrée (A0..A7 ; B0..B7).

6. Dispositif de commutation de sécurité (10) selon la revendication 5, dans lequel au moins une première entrée (A0..A2 ; B5..B7) est mise à un niveau haut ou bas en tant qu'entrée fixe, en particulier au début et/ou à la fin dudit au moins un registre à décalage (28A-B).

7. Dispositif de commutation de sécurité (10) selon la revendication 6, dans lequel l'unité de commande et d'évaluation (20 ; 20a-b) est réalisée pour vérifier la lecture correcte des états des entrées fixes, en particulier comme identifiant de début et/ou comme identifiant de fin.

8. Dispositif de commutation de sécurité (10) selon l'une des revendications précédentes, dans lequel la deuxième entrée (SI_{A}) est réalisée sous forme d'entrée série.

9. Dispositif de commutation de sécurité (10) selon l'une des revendications précédentes, dans lequel l'élément logique (30) est un élément XOR qui génère des bits de parité comme bits de contrôle et dont les deux entrées XOR sont reliées à différentes sorties (Q_{A}, Q_{B}) dudit au moins un registre à décalage (28A-B), en particulier à la sortie (Qc) du dernier registre à décalage (28C) et à la sortie (Q_{A}, Q_{B}) d'un autre registre à décalage (28A, 28B) parmi plusieurs registres à décalage (28A-C) connectés en série.

10. Dispositif de commutation de sécurité (10) selon l'une des revendications précédentes, dans lequel l'organe de lecture (26) est à canal unique.

11. Dispositif de commutation de sécurité (10) selon l'une des revendications précédentes, dans lequel l'unité de commande et d'évaluation (20 ; 20a-b) est réalisée pour lire plusieurs fois les positions de commutation et pour les vérifier quant à la cohérence à travers lesdites plusieurs opérations de lecture.

12. Procédé de réglage d'au moins un paramètre de fonctionnement d'un dispositif de commutation de sécurité (10), en particulier d'un relais de sécurité, à l'aide d'un dispositif de commutation de sécurité selon la revendication 1, dans lequel le paramètre de fonctionnement est réglé par l'unité de commande et d'évaluation (20 ; 20a-b) du dispositif de commutation de sécurité en fonction des positions de commutation d'une pluralité d'éléments de commutation (24 ; S0..S9),
**caractérisé en ce que**
pour la lecture sur un canal unique, les positions de commutation sont lues dans ledit au moins un registre à décalage (28A-B) et sont émises en série par ledit au moins un registre à décalage (28A-B) à l'unité de commande et d'évaluation (20 ; 20a-b), dans lequel le registre à décalage (28A-B) est relié par au moins une première entrée (A0..A7 ; B0..B7) aux éléments de commutation (24 ; S0 ... S9) et par une sortie (Q_{A}, Q_{B}) à l'unité de commande et d'évaluation (20 ; 20a-b),
**en ce que** ledit au moins un registre à décalage (28A-B) d'une sortie (Q_{A}, Q_{B}) dudit au moins un registre à décalage retourne vers une deuxième sortie dudit au moins un registre à décalage par l'intermédiaire de l'élément logique (30) du dispositif de commutation de sécurité, afin de lier le bit respectif, émis à la sortie, à un autre bit dudit au moins un registre à décalage, et génère ainsi des bits de contrôle, et **en ce que**
l'intégrité des positions de commutation lues est vérifiée sur la base des bits de contrôle.
